# EUROPEAN PATENT SPECIFICATION

(11) **EP 0 861 809 B1**
(45) Date of publication and mention of the grant of the patent: **19.09.2001**
(21) Application number: 98101877.3
(22) Date of filing: 20.04.1995
(51) Int. Cl.: C02F 9/00, C02F 1/00

(54) **Filter jug and a lid therefor**
Kanne mit Filter und ihr Deckel
Pot à eau avec filtre et son couvercle

(30) Priority: 20.04.1994 GB 9407799
(43) Date of publication of application: 02.09.1998
(62) Divisional of application: 95915942.7
(73) Proprietor: Kenwood Marks Limited, Havant, Hampshire PO9 2NH (GB)
(72) Inventor: Badni, Kevin Sam, Cowplain, Hampshire, PO8 8EP (GB)
(74) Representative: Marsh, Robin Geoffrey

(56) References cited:
- WO-A-92/08677
- GB-A- 2 269 586
- US-A- 5 190 643

## Description

This invention relates to a filter jug and a lid therefor and more specifically to a container in the form of a filter jug for filtering liquid, particularly water, and also a lid for such a container.

A known type of filter jug comprises a jug body having a handle, a pouring spout and a lid. The jug body contains a hopper in its upper part in which a filter element is mounted, such that water poured in the hopper is constrained to pass through the filter element into the lower part of the jug body. The filtered water can then be poured out of the jug body via the spout.

As it is necessary to replace the filter element after a predetermined amount of usage, some known filter jugs have an indicator mounted on the jug lid which is manually turned every time the jug is filled until it indicates that the filter should be replaced. However, a disadvantage of this type of indicator is that the user must remember to turn the indicator each time the jug is filled.

A further disadvantage of known filter jugs is that the lid must be removed from the jug body in order to fill the hopper with water to be filtered.

It is an object of the present invention to provide a filter jug and a lid therefor which alleviates the above mentioned disadvantages of such known filter jugs.

According to the invention there is provided a domestic water filtration jug having upper and lower body parts for receiving, respectively, tap water and filtered water; the jug supporting in its upper body part a hopper capable of accommodating a filter cartridge placed so that water received in the hopper can reach the lower body part only by flowing through the cartridge, the jug having, on opposing sides thereof, a handle and a spout, communicating only with the lower body part, through which filtered water can be poured and further being provided with a lid formed, towards the spout, with an aperture through which water can be introduced into the hopper, the lid also carrying a manually slidable closure plate for selectively opening and closing said aperture, a display permanently indicating by means of rotary movement, relative to the lid, of a rotatable member bearing a visible indicator, the current state of usage of the cartridge, and a mechanism linking the slidable movement of said closure plate to the rotary movement of said indicator to cause automatic, incremental and unidirectional rotary movements of said indicator relative to the lid in response to respective sliding movements of said closure plate, the mechanism incorporating a toothed wheel rotated by engagement of said teeth by a pawl moved when the closure plate moves, and a stop member, supported by a fixed portion of the lid, and also engaging the teeth of said toothed wheel, to resist rotary movement of said indicator in the opposite rotational direction to said unidirectional rotary movements.

The indicator is preferably arranged to turn through a predetermined angle each time the closure plate is moved to open the aperture.

The closure plate may be resiliently biased towards closing the aperture and is slidably retracted to open the aperture by a user-operable member. The user-operable member may be mounted on the handle of the jug, such that both the jug can be held and the aperture opened simultaneously with one hand. Alternatively, the closure plate may be moved to open the aperture by a user-operable rotary member such as a knob mounted on the lid.

The linking mechanism comprises a toothed wheel which is preferably turned through a predetermined angle each time the closure plate is opened.

Preferably also, the toothed wheel engages with teeth carried by the closure plate and the arrangement is such that a complete revolution of the wheel indicates that the filter cartridge should be replaced.

The wheel is preferably mounted on the underside of the lid and visible through a window provided in the lid.

The invention will now be described by way of example with reference to the accompanying drawings in which:-
Figure 1 is a perspective view of a filtering container or filter jug according to one embodiment of the invention;
Figure 2 is an exploded view of the lid of the filter jug shown in Figure 1; and
Figures 3 and 4 are a plan and a perspective view respectively of certain of the lid components shown in Figure 2.

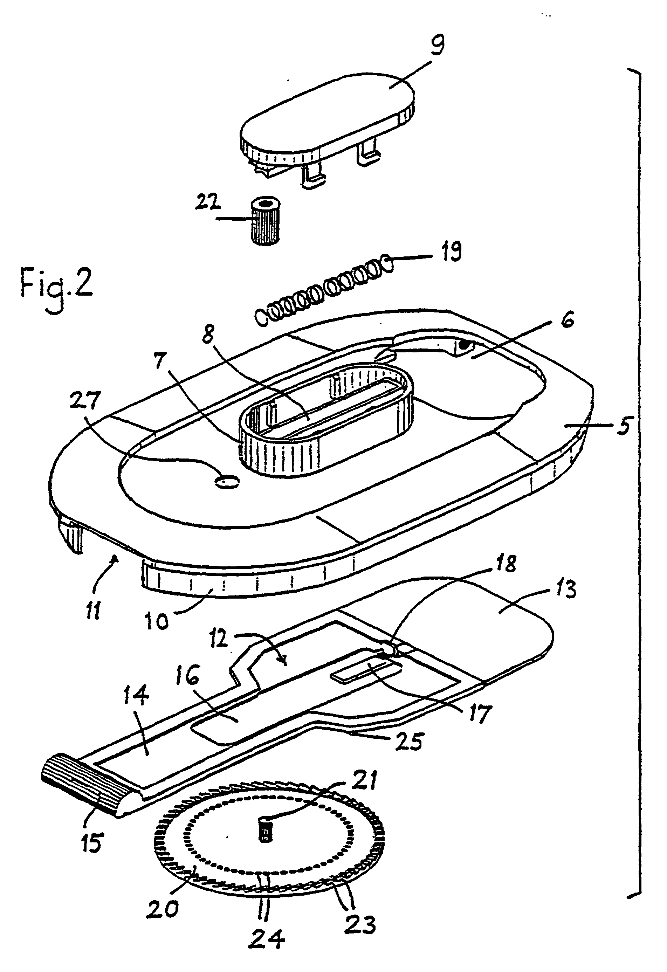

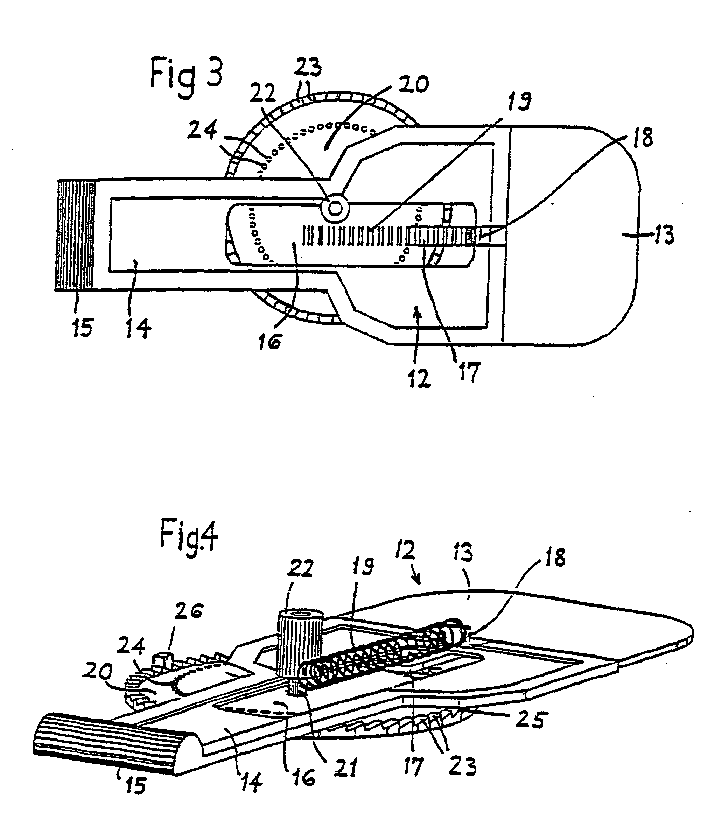

Figures 3 and 4 are a plan and a perspective view respectively of certain of the lid components shown in Figure 2.

Referring now to the drawings, a water filter jug has a hopper 1 mounted in the upper part of its body 2, the hopper accommodating a removable filter 3. At one end of the jug body 2 is a spout 4, which communicates only with the lower part of the jug body 2, and at the opposite end of the body 2 is 10 a handle 28.

A lid 5 fits over the jug body 2 so as to enclose the hopper 1. Towards the spout end of the lid 5 is an oval aperture 6, and the lid has at its centre a longitudinal oval housing 7, which provides a knob to remove the lid from the jug body and which contains a channel 8 and is closed by a cap 9. The lid 5 also has a peripheral skirt 10 depending from its edge and ensuring a good fit inside the rim of the hopper 1, and in the handle end of the skirt 10 is provided an opening 11.

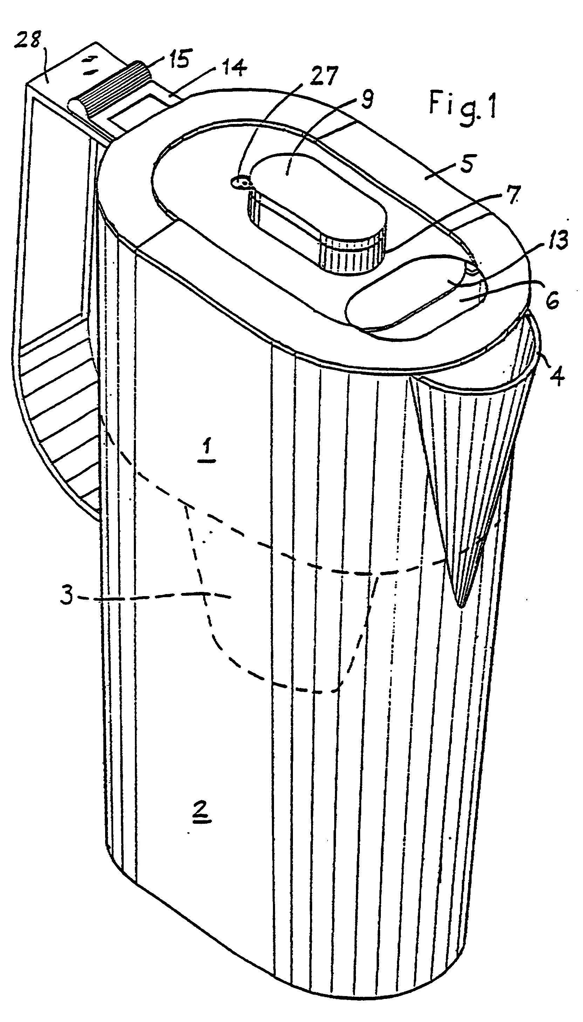

A slidable plate 12 has a portion 13 which acts as a cover to close the aperture 6. An elongated portion 14 of the plate 12 extends through the skirt opening 11 and has at its end a user-operable thumb grip 15. As can be seen in Figure 1, the thumb grip 15 overlies the upper part of the handle 28 of the jug.

The plate 12 has a central longitudinal slot 16 which partly extends into the elongated portion 14. A flange 17 extending into the slot 16, and a vertical lug 18 are provided adjacent the cover portion 13. A resilient member such as a spring 19 rests on the flange 17 and is located in the channel 8 with one end bearing against the lug 18 which protrudes into the channel 8. The other end of the spring 19 bears against the opposite end of the channel 8.

A rotary disc 20 is located below the plate 12, and at the centre of the disc 20 is an axle 21 which extends up through a hole (not shown) in the lid 5, inside the housing 7, and is received in a cylindrical disc holder 22 which allows rotation of the disc 20. Around the periphery of the disc 20 are a plurality of equally spaced teeth 23 which engage with a tooth 25 on the underside of the plate 12 to form a ratchet mechanism. An opposing tooth 26, seen in Figure 4, is provided on the underside of the lid 5 and is arranged to engage with the disc teeth 23 at a position substantially opposite the tooth 25. The upper surface of the disc 20 has markings 24 in any suitable form which can be viewed through a window 27 in the lid 5.

In order to enable water to enter the hopper 1, the aperture 6 is opened by pulling the plate 12 towards the handle 28, against the bias of the spring 19, by means of the thumb grip 15. As the plate moves, the tooth 25, which engages with the disc teeth 23, rotates the disc 20 clockwise through a preset angle depending on the number of teeth 25 and causes a different marking 24 to be visible through the window 27.

When the thumb grip 15 is released the spring 19 urges the lug 18 and hence the entire plate 12 towards the spout, thereby reclosing the aperture 6 with the cover portion 13. The tooth 25 slides over the sloping face of the tooth 23 with which it is engaged and the opposing tooth 26 prevents any anti-clockwise rotation of the disc 20.

The rotary disc 20 thus registers each time water can enter the hopper 1 via the open aperture 6 and the visible markings 24 on the disc 20 indicate the remaining useful life of the replaceable filter. In one example, the rotation of the disc and its markings may be arranged such that one complete revolution of the disc represents the total life of each filter element. Unlike known filter jugs, the hopper can be filled via the aperture 6 without removing the lid 5, and the jug can be held by the handle and the aperture can be opened by means of the thumb grip 15 simultaneously with one hand. This enables the hopper 1 to be easily and quickly filled, for example from a running tap, via the aperture 6 with the corresponding usage of the filter being automatically registered by the rotary disc 20.

Whilst a particular embodiment of the invention has been described, various modifications may be envisaged without departing from the scope of the invention, as defined in the appended claims. For example, instead of the thumb grip 15 which uses a linear sliding movement to move the cover portion 13 and thus open the aperture 6, the cover portion may be moved by means of a user-operable rotary member.

## Claims

1. A domestic water filtration jug having upper and lower body parts for receiving, respectively, tap water and filtered water; the jug supporting in its upper body part a hopper (1) capable of accommodating a filter cartridge (3) placed so that water received in the hopper can reach the lower body part only by flowing through the cartridge, the jug having, on opposing sides thereof, a handle (28) and a spout (4), communicating only with the lower body part, through which filtered water can be poured and further being provided with a lid (5) formed, towards the spout, with an aperture (6) through which water can be introduced into the hopper (1) , the lid (5) also carrying a manually slidable closure plate (12) for selectively opening and closing said aperture (6), a display (20,24) permanently indicating by means of rotary movement, relative to the lid (5), of a rotatable member (20), bearing a visible indicator (24), the current state of usage of the cartridge (3), and a mechanism linking the slidable movement of said closure plate (12) to the rotary movement of said indicator (24) to cause automatic, incremental and unidirectional rotary movements of said indicator relative to the lid (5) in response to respective sliding movements of said closure plate, **characterised in that** the mechanism incorporates a toothed wheel (20,23) rotated by engagement of said teeth (23) by a pawl (25) moved when the closure plate moves, and a stop member (26), supported by a fixed portion of the lid (5), and also engaging the teeth (23) of said toothed wheel, to resist rotary movement of said indicator (24) in the opposite rotational direction to said unidirectional rotary movements.

2. A jug as claimed in claim 1, wherein the closure plate (12) is linearly retractable to open the aperture by a user-operable member (13,14,15).

3. A jug as claimed in claim 2, wherein an actuator portion (15) the user-operable member (13,14,15) is mounted on the handle (28) of the jug, such that both the jug can be held by the handle and the actuator portion can be operated to open the aperture (6) simultaneously with one hand.

4. A jug as claimed in claim 3, wherein the user-operable member (13,14,15) comprises a thumb grip arranged to pull the closure plate (12) against resilient bias (19) so as to open the aperture (6).

5. A jug as claimed in claim 1, wherein the closure plate (12) is movable to open the aperture (6) by a user-operable rotary member such as a knob mounted on the lid.

6. A jug as claimed in any preceding claim wherein the arrangement is such that one complete revolution of the rotatable member (20) represents the total recommended life of the filter cartridge (3).

7. A jug as claimed in any preceding claim wherein said closure plate (12) is resiliently biased (19) towards closing the aperture (6).

8. A jug according to any preceding claim wherein the rotatable member (12) is mounted to the underside of said lid (5) and said indicator (24) is visible through a window (27) formed in the lid.

## Patentansprüche

1. Haushaltskanne zur Wasserfiltrierung mit oberen und unteren Gehäuseteilen zur Aufnahme von Leitungswasser bzw. gefiltertem Wasser, wobei die Kanne in ihrem oberen Gehäuseteil einen Trichter (1) beinhaltet, der eine Filterkartusche (3) aufnehmen kann, die so plaziert ist, dass von dem Trichter aufgenommenes Wasser nur durch Durchfließen der Kartusche in den unteren Gehäuseteil gelangen kann, wobei die Kanne an gegenüberliegenden Seiten einen Griff (28) und eine Tülle (4) aufweist, welche nur mit dem unteren Gehäuseteil kommuniziert, durch welches gefiltertes Wasser gegossen werden kann, wobei die Kanne weiterhin mit einem Deckel (5) versehen ist, der in Richtung zur Tülle hin mit einer Öffnung (6) versehen ist, durch welche Wasser in den Trichter (1) eingebracht werden kann, wobei der Deckel (5) weiterhin eine manuell verschiebbare Verschlußplatte (12) trägt, zum selektiven Öffnen und Schließen der Öffnung (6), sowie ein Display (20, 24), das permanent mittels einer Drehbewegung eines drehbaren Teils (20) mit einem sichtbaren Indikator (24) relativ zum Deckel (5) den aktuellen Zustand der Benutzung der Kartusche (3) anzeigt, sowie einen Mechanismus, der die Verschiebebewegung der Verschlußplatte (12) mit der Drehbewegung des Indikators (24) derart verknüpft, dass auf jeweilige Verschiebebewegungen der Verschlußplatte hin automatische, inkrementale und unidirektionale Drehbewegungen des Indikators relativ zum Deckel (5) bewirkt werden, **dadurch gekennzeichnet, dass** der Mechanismus ein Zahnrad (20, 23) beinhaltet, welches durch Eingriff der Zähne (23) durch eine Klinke (25) gedreht wird, die bewegt wird, wenn die Verschlußplatte bewegt wird, sowie ein Anschlagsteil (26), gehalten von einem ortsfesten Teil des Deckels (5), das gleichfalls mit den Zähnen (23) des Zahnrades im Eingriff ist, um einer Drehbewegung des Indikators (24) in die gegenüber den unidirektionalen Drehbewegungen entgegengesetzte Drehrichtung einen Widerstand entgegenzusetzen.

2. Kanne nach Anspruch 1, wobei die Verschlußplatte (12) linear zurückziehbar ist, um die Öffnung mittels eines vom Bediener betätigbaren Teils (13, 14, 15) zu öffnen.

3. Kanne nach Anspruch 2, wobei ein Stellglied-Teil (15) des vom Bediener betätigbaren Teils (13, 14, 15) am Griff (28) der Kanne angebracht ist, derart, dass gleichzeitig mit einer Hand sowohl die Kanne am Griff gehalten als auch das Stellglied-Teil zum Öffnen der Öffnung (6) betätigt werden kann.

4. Kanne nach Anspruch 3, wobei das vom Bediener betätigbare Teil (13, 14, 15) einen zum Zurückziehen der Verschlußplatte (12) gegen eine nachgiebige Vorspannung (19) im Sinne des Öffnens der Öffnung (6) vorgesehenen Daumengriff umfaßt.

5. Kanne nach Anspruch 1, wobei die Verschlußplatte (12) bewegbar ist, zum Öffnen der Öffnung (6), durch ein vom Bediener betätigbares Drehteil, wie etwa einen auf dem Deckel angebrachten Knopf.

6. Kanne nach einem der vorstehenden Ansprüche, wobei die Anordnung derart ausgestaltet ist, dass eine vollständige Umdrehung des drehbaren Teils (20) der empfohlenen Gesamt-Nutzungsdauer der Filterkartusche (3) entspricht.

7. Kanne nach einem der vorstehenden Ansprüche, wobei die Verschlußplatte (12) in Richtung auf das Schließen der Öffnung (6) mit nachgiebiger Vorspannung (19) versehen ist.

8. Kanne nach einem der vorstehenden Ansprüche, wobei das Drehteil (12) an der Unterseite des Deckels (5) angebracht ist und der Indikator (24) durch ein in dem Deckel ausgebildetes Fenster (27) sichtbar ist.

## Revendications

1. Pichet domestique filtrant l'eau comportant des parties structurelles supérieure et inférieure destinées à recevoir, respectivement, de l'eau du robinet et de l'eau filtrée ; le pichet supportant, dans sa partie structurelle supérieure, une trémie (1) capable de recevoir une cartouche filtrante (3) placée de manière a ce que l'eau reçue dans la trémie ne puisse atteindre la partie structurelle Inférieure qu'en s'écoulant à travers la cartouche, le pichet comportant, sur des cótés opposés, une poignée (28) et un bec verseur (4), ne communiquant qu'avec la partie structurelle inférieure, à travers lequel l'eau filtrée peut être versée et comportant en outre un couvercle (5) formé, dans la direction du bec verseur, avec une ouverture (6) à travers laquelle de l'eau peut être introduite dans la trémie (1), le couvercle (5) comportant aussi une plaque de Fermeture (12) que l'on peut faire coulisser à la main pour ouvrir et fermer d'une manière sélective ladite ouverture (6), un affichage (20, 24) Indiquant en permanence par l'intermédiaire d'un déplacement rotatif, par rapport au couvercle (5), d'un élément rotatif (20), comportant un indicateur visible (24), l'état d'utilisation courant de la cartouche (3), et un mécanisme reliant le déplacement coulissant de ladite plaque de fermeture (12) au déplacement rotatif dudit indicateur (24) pour provoquer des déplacements rotatifs automatiques, incrémentaux et unidirectionnels dudit indicateur par rapport au couvercle (5) en réponse aux déplacements coulissants respectifs de ladite plaque de fermeture, **caractérisé en ce que** le mécanisme incorpore une roue dentée (20, 23) entraînée en rotation par l'engrènement desdites dents (23) avec un cliquet (25) qui est déplacé lorsque la plaque de fermeture se déplace, et un élément d'arrêt (26), supporté par une partie fixe du couvercle (5), et engrenant aussi avec les dents (23) de ladite roue dentée, afin d'empêcher un mouvement rotatif dudit indicateur (24) dans le sens de rotation opposé auxdits mouvements rotatifs unidirectlonnels.

2. Pichet selon la revendication 1, dans lequel la plaque de fermeture (12) peut être rétractée linéairement de manière à ouvrir l'ouverture grâce à un élément ( 13, 14, 15) que peut actionner l'utilisateur.

3. Pichet selon la revendication 2, dans lequel une partie actionneur (15) de l'élément (13, 14, 15) qui peut être actionné par l'utilisateur est montée sur la poignée (28) du pichet, de manière à ce que le pichet puisse être tenu à la main et la partie actionneur puisse être actionnée afin d'ouvrir l'ouverture (6), simultanément, avec une seule main.

4. Pichet selon la revendication 3, dans lequel l'élément (13, 14, 15) que peut actionner l'utilisateur comprend un élément saisissable avec le pouce qui permet de tirer sur la plaque de fermeture (12) à l'encontre d'un rappel élastique (19) de manière à ouvrir l'ouverture (6).

5. Pichet selon la revendication 1, dans lequel la plaque de fermeture (12) peut être déplacée de manière à ouvrir l'ouverture (6) grâce à un élément rotatif que peut actionner l'utilisateur, tel qu'un bouton monté sur le couvercle.

6. Pichet selo l'une quelconque des revendications précédentes, dans lequel l'agencement est tel qu'une révolution complète de l'élément rotatif (20) représente la durée d'utilisatlon totale recommandée de la cartouche filtrante (3).

7. Pichet selon l'une quelconque des revendications précédentes, dans lequel ladite plaque de fermeture (12) est rappelée élastiquement (19) de manière à fermer l'ouverture (6).

8. Pichet selon l'une quelconque des revendications précédentes, dans lequel l'élément rotatif (12) est monté sur la face Inférieure dudit couvercle (5) et ledit indicateur (24) est visible à travers une fenêtre (27) formée dans le couvercle.
